# EUROPÄISCHE PATENTSCHRIFT

(11) **EP 2 900 445 B1**
(45) Veröffentlichungstag und Bekanntmachung des Hinweises auf die Patenterteilung: **01.03.2017**
(21) Anmeldenummer: 13762501.8
(22) Anmeldetag: 16.09.2013
(51) Int. Cl.: B29C 44/00, B29C 44/12, B29C 44/32, E06B 3/263

(54) **VERFAHREN ZUR HERSTELLUNG VON VERBUNDPROFILEN**
METHOD FOR MANUFACTURING COMPOSITE PROFILES
PROCÉDÉ DE FABRICATION DE PROFILÉS COMPOSITES

(30) Priorität: 28.09.2012 EP 12186476
(43) Veröffentlichungstag der Anmeldung: 05.08.2015
(73) Patentinhaber: BASF SE, 67056 Ludwigshafen am Rhein (DE)
(72) Erfinder: KÖSTERS, Michael, 49504 Lotte (DE); TOMASI, Gianpaolo, 49356 Diepholz (DE); SCHÖN, Lars, 48151 Münster (DE); WINDELER, Ludwig, 49448 Marl (DE)
(74) Vertreter: BASF IP Association
(86) Internationale Anmeldenummer: PCT/EP2013/069130
(87) Internationale Veröffentlichungsnummer: WO 2014/048785

(56) Entgegenhaltungen:
- EP-A1- 1 925 417
- WO-A2-2008/104492
- DE-A1- 10 035 649

## Beschreibung

Gegenstand der Erfindung ist ein Verfahren zur Herstellung von Verbundprofilen aus Metallschalen, Stegen aus einem thermoplastischen Material und einem Kern aus Polyurethan-Hartschaumstoff, wie sie beispielsweise für Fenster- und Türrahmen eingesetzt werden. Polyurethan-Hartschaumstoffe sind seit langem bekannt und vielfach in der Literatur beschrieben. Ihr Einsatz erfolgt beispielsweise zur Wärmedämmung in Kühlgeräten, zur Herstellung von Verbundelementen, auch als Sandwich-Elemente bezeichnet, sowie im Bauwesen.

Ein Einsatzgebiet für Polyurethan-Hartschaumstoffe ist die Herstellung von Verbundprofilen, die insbesondere für Fenster- oder Türrahmen verwendet werden. Dabei wird aus zwei Metallschalen, beispielsweise aus Aluminium, und zwei Kunststoffstegen, beispielweise aus Polyamid, ein Hohlprofil hergestellt, in das die flüssigen Ausgangskomponenten des Polyurethan-Hartschaums appliziert werden, wo sie dann zum Schaum aushärten. Nach der Aushärtung des Schaums werden die Verbundelemente lackiert. Zur Lackierung werden üblicherweise Pulver- oder Einbrennlacke verwendet. Diese Lackierung erfolgt bei hoher Temperatur, zumeist im Bereich von 200 °C, was aufgrund der Gasausdehnung im Polyurethanhartschaum sowie der unterschiedlichen Wärmeausdehnung von Aluminium und Polyurethanhartschaum zu einer Verformung der Verbundelemente führen kann.

Konzepte zur Vermeidung dieser Verformung sind aus dem Stand der Technik bekannt.

So beschreibt die EP-A 1925417 ein Verfahren zur Herstellung von Verbundprofilen, die vollständig ausgeschäumt sind und die bei hohen Temperaturen lackiert werden können, ohne dass es zu einer Verformung der Verbundelemente kommt. Allerdings müssen hier mineralische Füllstoffe zugesetzt werden, um einer Verformung der Verbundelemente entgegenzuwirken. Die im Stand der Technik verwendeten Treibmittel besitzen darüber hinaus ein sogenanntes Global Warming Potential.

Füllstoffe sind jedoch für viele Anwendungen nachteilig. Sie verursachen beim Durchschneiden oder -sägen von vollständig ausgeschäumten Hohlkammerprofilen zum Teil erheblichen Staub. Sie verursachen Sprödigkeit und Einbußen in der Flexibilität insbesondere im Temperaturbereich unterhalb 0°C.

Ein Verfahren zur Herstellung derartiger Verbundelemente wird außerdem in der DE-A 10035649 beschrieben. Das Problem der Verformung der Profile wird dadurch gelöst, dass der Hohlraum zwischen den Metallschalen und Polyamidstegen nur zum Teil mit Polyurethanschaum gefüllt wird. Durch die unvollständige Füllung der Profile mit dem Polyurethanschaum kommt es jedoch entweder zu einer Verschlechterung der Wärmedämmeigenschaften der Profile oder zu einer Verformung der vollständig ausgeschäumten Verbundelemente insbesondere durch die Lackierung.

Es war die Aufgabe der vorliegenden Erfindung, die vorgenannten Nachteile zu vermeiden. Insbesondere sollte ein Verfahren zur Herstellung von Verbundelement der eingangs genannten Art aufgefunden werden, welches zu Profilen führt, die beim Lackieren unter hohen Temperaturen keine Verformung zeigen und die auch bei Temperaturen unter 0°C gute mechanische Eigenschaften aufweisen und die ohne Staubbildung geschnitten werden können.

Die Aufgabe wird erfindungsgemäß gelöst durch ein Verfahren zur Herstellung von Verbundprofilen umfassend mindestens zwei Metallschalen, die mit Stegen aus einem thermoplastischen Material verbunden sind, und einem Kern aus Polyurethan-Hartschaumstoff, umfassend das Einbringen der Ausgangskomponenten des Polyurethan-Hartschaumstoffs in einen von den Metallschalen gebildeten Hohlraum, wobei sich der Polyurethan-Hartschaumstoff bildet, und anschließend die Lackierung der Aussenfläche des Verbundprofils mittels eines Pulverlacks oder Einbrennlacks, wobei der Polyurethan-Hartschaumstoff durch Umsetzung folgender Komponenten erhalten wird:
A) mindestens ein Polyisocyanat,
B) mindestens eine mehrfunktionelle gegenüber Isocyanaten reaktive Verbindung,
C) ein oder mehrere Treibmittel mindestens umfassend Ameisensäure,
D) gegebenenfalls ein oder mehrere Flammschutzmittel,
E) gegebenenfalls ein oder mehrere Katalysatoren, und
F) gegebenenfalls weitere Hilfsmittel oder Zusatzstoffe,
wobei die Ausgangskomponenten des Polyurethan-Hartschaumstoffs keine anorganischen Füllstoffe enthalten.

Im Rahmen der Erfindung werden unter Polyurethan-Schaumstoffen Schaumstoffe gemäß DIN 7726 verstanden. Die erfindungsgemäßen Polyurethan-Hartschaumstoffe weisen eine Druckspannung bei 10 % Stauchung von größer gleich 80 kPa, bevorzugt größer gleich 150 kPa, besonders bevorzugt größer gleich 180 kPa auf. Weiterhin verfügt der Polyurethan-Hartschaumstoff nach DIN ISO 4590 über eine Geschlossenzelligkeit von größer 85%, bevorzugt größer 90 %.

Die zur Herstellung der Verbundprofile eingesetzten Metallschalen bestehen zumeist aus Stahl oder Aluminium. Ihre Herstellung erfolgt üblicherweise durch mechanische Formgebung. Die Größe der Metallschale hängt von der gewünschten Größe der Fenster- und Türrahmen ab. Die eingefügten Kunststoffstege, zumeist aus Polyamid oder ASA, bilden einen Hohlraum zwischen den Metallschalen, in den der Polyurethan-Schaum eingebracht und der anschließend verschlossen wird.

Nach der Formgebung erfolgt das Einbringen des Polyurethan-Schaums in das Verbundprofil. Dies erfolgt, indem die Polyisocyanate A) mit den Komponenten B) bis F) vermischt und danach in das Verbundprofil eingebracht werden, wo sie zum Polyurethan-Hartschaum aushärten. Die Dosierung erfolgt üblicherweise, wie auch oben beschrieben, mittels üblicher Dosiervorrichtungen, zumeist mittels Mischköpfen. Die Menge des Schaumstoffs ist so zu bemessen, dass das Verbundprofil vollständig ausgefüllt wird, es jedoch nicht zu einem so hohen Druckaufbau kommt, dass das Verbundprofil zerstört oder verformt wird.

Nach dem Aushärten des Polyurethan- Hartschaums wird das erfindungsgemäße Verbundprofil lackiert. Zum Lackieren werden erfindungsgemäß Einbrennlacke oder Pulverlacke verwendet. Diese Lacktypen weisen eine hohe Kratzfestigkeit auf.

Einbrennlacke sind Lacke, deren Härtung bei erhöhter Temperatur, vorzugsweise von 100 bis 250°C erfolgt.

Einbrennlacke sind üblicherweise Lacke auf der Basis von Acryl-, Epoxid-, Phenol-, Melamin-, Harnstoff-, Silicon-, Polyurethanharzen, die allein oder in Kombinationen miteinander oder mit einem meist blockierten Härter, beispielsweise blockierten Poly-isocyanaten, bei höherer Temperatur, vorzugsweise im Bereich von 100 bis 250 °C gehärtet werden. Die Härtung erfolgt aufgrund von Vernetzungsreaktionen durch die Aktivierung der in den Molekülen dieser Verbindungen vorhandenen Doppelbindungen oder durch Reaktion verschiedener funktioneller Gruppen miteinander. Nur in Ausnahmefällen setzt man auch Trockenstoffe zu. In der Praxis werden Einbrennlacke auf den Werkstücken in Einbrennöfen oder Trockenöfen verschiedener Dimension unter festgelegten Einbrennbedingungen gehärtet. Teilweise werden zur Wärmeerzeugung Infrarotstrahler oder auch Vorrichtungen eingesetzt, die auf der Basis elektromagnetischer Induktion arbeiten.

Flüssige Ausgangsmaterialien für Einbrennlacke (nachfolgend vereinfachend als Einbrennlacke bezeichnet) können sowohl lösemittelbasierende als auch Wasserlacke, pigmentierte, transparente oder Klarlacke sein. Bevorzugte Bindemittel in Einbrennlacken sind Alkyd-, Polyester-, Acryl- oder Epoxidharze in Kombination mit Melaminharzen, Aminen oder Polyisocyanaten als Vernetzer.

Die Einstellung der Einbrennlacke auf die Verarbeitungskonsistenz erfolgt mit organischen Lösemitteln bzw. mit Wasser, dem kleine Mengen Propan-2-ol, Butanol oder andere Alkohole beigemischt sind.

Unter Pulverlacken versteht man pulverförmige, lösemittelfreie Beschichtungsstoffe, die nach dem Schmelzen und gegebenenfalls Einbrennen eine Beschichtung ergeben. Der Temperaturbereich für die Verarbeitung liegt in Abhängigkeit des vorliegenden Systems zwischen 80 °C und 250 °C. Sie werden in Pulverform vorwiegend auf metallische Substrate aufgetragen. Zumeist versteht man unter Pulverlacken duroplastische Systeme. Die filmbildende Phase der Pulverlacke setzt sich aus Bindemitteln, Reaktionspartnern für diese Bindemittel, auch als Härter bezeichnet, Füllstoffen, Pigmenten und Additiven zusammen. Die verwendeten Bindemittel und Härter bestimmen dabei im Wesentlichen die generellen Eigenschaften des Pulverlacks und damit auch sein bevorzugtes Anwendungsgebiet.

Pulverlacke basieren zumeist auf Epoxidharzen, Epoxidharz/Polyester-Gemischen, Polyestern, Polyester/Isocyanat-Gemischen und Acrylaten. Die daraus gefertigten Pulverlacke heißen Epoxidharz-, Epoxidharz/Polyester-, Polyester-, Polyurethan- oder Acrylat-Pulverlacke.

Die erfindungsgemäß erhaltenen Verbundprofile können vorteilhaft für Fenster- oder Türrahmen verwendet werden.

Zur Herstellung des Polyurethan-Hartschaumstoffs und den dafür eingesetzten Ausgangsverbindungen ist im Einzelnen Folgendes zu sagen.

### Komponente A)

Unter Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der gewichtsmittlere Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4-und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'-und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'-und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate der Komponente A) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im Folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDIbasierten Isocyanaten mit unterschiedlicher Funktionalität aufgebaut. Üblicherweise wird polymeres MDI im Gemisch mit monomerem MDI eingesetzt.

Die (gewichtsmittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unter-schiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente A) mindestens zwei, insbesondere mindestens 2,2 und besonders bevorzugt mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,4 auf.

Die Viskosität der eingesetzten Komponente A) kann in einem weiten Bereich variieren. Vorzugsweise weist die Komponente A) eine Viskosität von 100 bis 3000 mPa*s, besonders bevorzugt von 200 bis 2500 mPa*s, auf.

### Komponente B

Erfindungsgemäß umfasst Komponente B) mindestens eine mehrfunktionelle gegenüber Isocyanaten reaktive Verbindung. Mehrfunktionelle gegenüber Isocyanaten reaktive Verbindungen sind solche, die mindestens zwei gegenüber Isocyanaten reaktive Wasserstoffatome aufweisen, insbesondere mindestens zwei gegenüber Isocyanaten reaktive funktionelle Gruppen.
Die eingesetzten Verbindungen der Komponente B) weisen bevorzugt eine Funktionalität von 2 und 8, insbesondere von 2 bis 6 auf. Sofern mehrere unterschiedliche Verbindungen im Rahmen von Komponente B) zum Einsatz kommen, dann beträgt die gewichtsmittlere Funktionalität der Komponente B) vorzugsweise 2,2 bis 5, besonders bevorzugt 2,4 bis 4, ganz besonders bevorzugt von 2,6 bis 3,8. Unter gewichtsmittlerer Funktionalität wird der Wert verstanden, der resultiert, wenn man die Funktionalität jeder Verbindung B) mit dem Gewichtsanteil dieser Verbindung in der Komponente B) gewichtet.

Polyetherpolyole sind als Verbindungen B) bevorzugt. Der Begriff Polyetherpolyol wird synonym zu dem Begriff Polyetherol verwendet und kennzeichnet alkoxylierte Verbindungen mit mindestens zwei reaktiven Hydroxylgruppen.

Bevorzugte Polyetherpolyole B) besitzen eine Funktionalität von 2 bis 8 und weisen Hydroxylzahlen von 100 mgKOH/g bis 1200 mgKOH/g, bevorzugt 150 bis 800 mgKOH/g, insbesondere 200 mgKOH/g bis 550 mgKOH/g auf. Alle Hydroxylzahlen in der vorliegenden Erfindung werden nach DIN 53240 bestimmt.

Im Allgemeinen beträgt der Anteil der Komponente B) bezogen auf die Summe der Komponenten B) bis F) von 40 bis 98 Gew.-%, bevorzugt von 50 bis 97 Gew.-%, besonders bevorzugt 60 bis 95 Gew.-%.

Die im Rahmen von Komponente B) bevorzugten Polyetherole können nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Besonders bevorzugte Alkylenoxide sind 1,2-Propylenoxid und Ethylenoxid.

Vorzugsweise umfasst Komponente B) mindestens ein Polyetherpolyol mit einer Hydroxylzahl von 200 bis 400 mgKOH/g, insbesondere von 230 bis 350 mgKOH/g und einer Funktionalität von 2 bis 3. Die vorgenannten Bereiche gewährleisten ein gutes Fliessverhalten der reaktiven Polyurethanmischung.

Vorzugsweise umfasst Komponente B) darüber hinaus mindestens ein Polyetherpolyol mit einer Hydroxylzahl von 300 bis 600 mgKOH/g, insbesondere 350 bis 550 mgKOH/g und einer Funktionalität von 4 bis 8, insbesondere 4 bis 6. Die vorgenannten Bereiche führen zu einer guter chemischen Vernetzung der reaktiven Polyurethanmischung.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methyl-und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei oder mehrwertige Alkohole, wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Als Verbindungen in Komponente B) kommen darüber hinaus Polyesteralkohole mit Hydroxylzahlen von 100 bis 1200 mgKOH/g in Betracht.

Bevorzugte Polyesteralkohole werden durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Zu den bevorzugten Verbindungen der Komponente B) gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Sofern gewünscht werden Kettenverlängerungsmittel, Vernetzungsmittel oder Mischungen davon zweckmäßigerweise in einer Menge von 1 bis 20 Gew.-%, vorzugsweise 2 bis 5 Gew.-%, bezogen auf die Gewichtsmenge der Komponente B) eingesetzt.

Weitere Angaben zu den bevorzugten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

### Komponente C

Erfindungsgemäß umfassen die im Verfahren eingesetzten Ausgangskomponenten ein oder mehrere Treibmittel. Erfindungsgemäß umfasst die Komponente C) zumindest Ameisensäure. In einer bevorzugten Ausführungsform werden im Rahmen von Komponente C) neben Ameisensäure mindestens ein weiteres Treibmittel verwendet, insbesondere Wasser.

Als Treibmittel C) ist eine wässrige Lösung von Ameisensäure besonders bevorzugt. Besonders bevorzugt wird als Treibmittel C) Ameisensäure gelöst in Wasser in einer Konzentration von 50 bis 99 Gew.-%, insbesondere 60 bis 95 Gew.-%, besonders bevorzugt von 70 bis 90 Gew.-% eingesetzt.

(Wässrige) Ameisensäure reagiert mit Isocyanatgruppen unter Bildung von Kohlendioxid und Kohlenstoffmonoxid. Da Ameisensäure und Wasser das Treibgas durch eine chemische Reaktion mit den Isocyanatgruppen freisetzen, werden sie als chemische Treibmittel bezeichnet.

Zusätzlich können physikalische Treibmittel wie niedrig siedende Kohlenwasserstoffe eingesetzt werden. Geeignet sind insbesondere Flüssigkeiten, welche gegenüber den Polyisocyanaten A) inert sind und Siedepunkte unter 100 °C, vorzugsweise unter 50 °C bei Atmosphärendruck aufweisen, so dass sie unter dem Einfluss der exothermen Polyadditionsreaktion verdampfen.

Beispiele derartiger, vorzugsweise mitverwendeter Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können mitverwendet werden. Geeignet sind ferner organische Carbonsäuren, wie z.B. Essigsäure, Oxalsäure, Ricinolsäure und carboxylgruppenhaltige Verbindungen. Die zusätzlichen Treibmittel werden bevorzugt ausgewählt aus der Gruppe enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan. In Betracht kommen auch Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan sowie Hydrofluorolefine (HFO).

Vorzugsweise werden keine halogenierten Kohlenwasserstoffe als Treibmittel verwendet. Vorzugsweise werden als zusätzliche Bestandteile der Komponente C) Pentane oder Mischungen von Pentanisomeren verwendet.

Die Treibmittel sind entweder ganz oder teilweise in der Polyolkomponente (d.h. B+C+D+E+F) gelöst oder werden direkt vor dem Verschäumen der Polyolkomponente über einen Statikmischer zudosiert. Für gewöhnlich liegen Ameisensäure-Wasser-Mischungen oder Ameisensäure ganz oder teilweise in der Polyolkomponente gelöst vor. Gegebenenfalls wird das physikalische Treibmittel (beispielsweise Pentan) und gegebenenfalls ein Rest des chemischen Treibmittels "online" dosiert.

Die eingesetzte Menge der Komponente C) liegt bei 1 bis 45 Gew.-%, vorzugsweise 1 bis 30 Gew.-%, besonders bevorzugt 2 bis 15 Gew.-%, jeweils bezogen auf die Gewichtsmenge der Komponenten B) bis F).

Dient ausschließlich Ameisensäure oder eine Ameisensäure-Wasser-Mischung als Treibmittel, so beträgt der Anteil der Komponente C) an der Gewichtsmenge der Komponenten B) bis F) vorzugsweise von 0,5 bis 10 Gew.-%, insbesondere von 1 bis 8 Gew.-%, besonders bevorzugt von 2 bis 6 Gew.-%.

Der Zusatz der Ameisensäure und gegebenenfalls Wasser kann in Kombination mit dem Einsatz der anderen beschriebenen Treibmittel erfolgen. In einer Ausführungsform wird Ameisensäure oder eine Ameisensäure-Wasser-Mischung in Kombination mit Pentan, insbesondere Cyclopentan und/oder n-Pentan, eingesetzt.

### Komponente D

Vorzugsweise erfolgt die Umsetzung zum Polyurethan-Hartschaumstoff in Gegenwart eines oder mehrerer Flammschutzmittel.

Als Flammschutzmittel D) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)phosphat, Tris-(2-chlorpropyl)phosphat (TCPP), Tris(1,3-dichlorpropyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Bevorzugte Flammschutzmittel weisen keine mit Isocyanatgruppen reaktive Gruppen auf. Vorzugsweise sind die Flammschutzmittel bei Raumtemperatur flüssig. Besonders bevorzugt sind TCPP, DEEP, TEP, DMPP und DPK.

Die Flammschutzmittel werden im Rahmen der vorliegenden Erfindung vorzugsweise in einer Menge von 0 bis 65 Gew.-%, bevorzugt von 5 bis 60 Gew.-%, besonders bevorzugt von 5 bis 50 Gew.-%, insbesondere von 6 bis 15 Gew.-% bezogen auf das Gesamtgewicht der Komponenten B) bis F) verwendet.

### Komponente E

Vorzugsweise erfolgt die Umsetzung zum Polyurethan-Hartschaumstoff in Gegenwart eines oder mehrerer Katalysatoren.

Als Katalysatoren E) zur Herstellung der Polyurethan-Hartschaumstoffe werden insbesondere Verbindungen verwendet, die die Reaktion der reaktiven Wasserstoffatome, insbesondere Hydroxylgruppen, enthaltenden Verbindungen der Komponenten B) bis F) mit den Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethyl-aminoethylpiperidin, 1,2-Dimethylimidazol, 1-Azabicyclo-(2,2,0)-octan, 1,4.Diazabicyclo.-(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)-ethanol, N,N',N"-Tris-(dialkylaminoalkyl)hexahydrotriazine, z.B. N,N',N"-Tris-(dimethylamino-propyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydro-pyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gew.-teile Katalysator bzw. Katalysatorkombination, bezogen (d. h. gerechnet) auf 100 Gewichtsteile der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

### Komponente F

Die Umsetzung kann zudem unter Verwendung von weiteren Hilfs- oder Zusatzstoffen erfolgen.

Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-teile, bezogen (d. h. gerechnet) auf 100 Gew.-teile der Komponente B), angewandt.

Als Füllstoffe, insbesondere verstärkend wirkende Füllstoffe, sind die an sich bekannten, üblichen organischen Füllstoffe, Verstärkungsmittel, Beschwerungsmittel, Mittel zur Verbesserung des Abriebverhaltens in Anstrichfarben, Beschichtungsmittel usw. zu verstehen. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan, Polyesterfasern auf der Grundlage von aromatischen und/oder aliphatischen Dicarbonsäureestern und insbesondere Kohlenstofffasern.

Die organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A) bis F), zugegeben, wobei jedoch der Gehalt an Matten, Vliesen und Geweben aus natürlichen und synthetischen Fasern Werte bis 80 Gew.-%, bezogen auf das Gewicht der Komponenten A) bis F), erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Band 7: "Polyurethane", Carl-Hanser-Verlag München, 3. Auflage, 1993 zu entnehmen.

Zur Herstellung der Polyurethan-Hartschaumstoffe werden die Polyisocyanate A) und die Polyolkomponente B) bis F) vorzusgweise in solchen Mengen zur Umsetzung gebracht, dass der Isocyanatindex in einem Bereich von 90 bis 700, vorzugsweise von 100 bis 500, liegt.

Üblicherweise werden die erfindungsgemäßen Polyurethan-Hartschaumstoffe nach dem Zweikomponenten-Verfahren hergestellt. Bei diesem Verfahren werden die Komponenten B) bis F) zu der sogenannten Polyolkomponente vermischt und diese mit den Polyisocyanaten A) zur Umsetzung gebracht.

Die Ausgangskomponenten werden zumeist bei einer Temperatur von 15 bis 35 °C, vorzugsweise von 20 bis 30 °C gemischt. Das Reaktionsgemisch kann mit Hoch- oder Niederdruckdosiermaschinen in die Verbundprofile eingebracht werden.

Überraschenderweise zeigen die für das erfindungsgemäße Verfahren eingesetzten Polyurethan-Hartschaumstoffe bei der Lackierung keinerlei Aufblähungen des Polyurethan-Hartschaumstoffes. Darüber hinaus lassen sich die Profile gut verarbeiten und zeigen auch bei Frost gute Gebrauchseigenschaften.

Die Erfindung soll anhand der nachfolgenden Beispiele näher erläutert werden.

Es kamen folgende Polyole zum Einsatz:
Polyol B-1: Polyetherpolyol mit einer Hydroxylzahl von 490 mg KOH/g, basierend auf Propylenoxid und Sorbitol als Starter
Polyol B-2: Polyetherpolyol mit einer Hydroxylzahl von 248 mg KOH/g, basierend auf Propylenoxid und Propylenglykol als Starter
Komponente C-1: Ameisensäure 85%
Komponente C-2: Wasser
Verbindung D-1: Tris(2-chlorisopropyl)phosphat
Verbindung E-1: N,N- Dimethylcyclohexylamin
Verbindung F-1: Stabilisator auf Silikonbasis, Niax Silicone L- 6900

Die in Tabelle 1 aufgeführten Komponenten wurden zu einer Polyolkomponente vermischt.

**Tabelle 1:**

| | Beispiel 1 | Beispiel 2 |
|---|---|---|
| Komponente | Einsatzmenge [Gew.-%] | |
| B-1 | 37,1 | 36,5 |
| B-2 | 36,5 | 38,5 |
| C-1 | 4,5 | - |
| C-2 | - | 3,7 |
| D-1 | 19,0 | 19,0 |
| F-1 | 1,7 | 1,7 |
| E-1 | 1,2 | 0,6 |

Als Isocyanatkomponente wurde eine Mischung von 2,4'- und 4,4'- Diphenylmethandiisocyanat mit höher funktionellen Oligomeren und Isomeren (Roh- MDI), mit einem NCO- Gehalt von 31,5 % verwendet (IsoPMDI 92410 von BASF). Die Verschäumungen im Labormaßstab wurden mit einem Isocyanatindex von 115 durchgeführt.

Im Rahmen von Produktionsversuchen wurden Polyol- und Isocyanatkomponente auf einer Niederdruckanlage mit einem Isocyanatindex von 115 zur Umsetzung gebracht und Aluminium-Polyamid- Verbundprofile mit einer Höhe von 70 mm und einer Breite von 250 mm ausgeschäumt. Diese wurden dann anschließend einer Pulverlackierung unterzogen.

Weiterhin wurden mit den beschriebenen Polyurethan-Hartschaumstoffen Aluminium-Polyamid-Verbundprofile mit einer Höhe von 3 cm und einer Breite von 6 cm gefertigt und einer Pulverlackierung bei 200 °C unterzogen.

Die Profile zeigten im Fall von Beispiel 1 auch nach der Lackierung keinerlei Verformung.

Hingegen wurden bei Ausschäumungen von Aluminium- Polyamid- Verbundprofilen, die mit verschiedenen füllstofffreien Rezepturen mit Wasser als Treibmittel hergestellt wurden, sowohl im Labor- als auch im Produktionsmaßstab Verformungen an den vollständig ausgeschäumten Verbundelementen insbesondere durch die Lackierung festgestellt (Beispiel 2).

Weiterhin wurden Formulierungen mit Ameisensäure als Treibmittel sowie mit steigenden Mengen an Calciumcarbonat (Calciumcarbonatgehalt von 0 - 50 Gew.%) in Labor- bzw. Produktionsversuchen getestet. Diesbezüglich stellt die Einarbeitung feinkörniger Füllstoffe in das Reaktionsgemisch hohe Anforderungen an die Verschleissfestigkeit der Dosierpumpen. Die entsprechenden Formulierungen wurden mit abnehmender Kälteflexibilität getestet. Des Weiteren konnte die im Fertigungsprozess in vielen Fällen unerwünschte Zunahme an Staub nach Durchschneiden oder-sägen von vollständig ausgeschäumten Hohlkammerprofilen ebenfalls festgestellt werden. Nachteilig ist in vielen Fällen zudem die Dichtezunahme des fertigen füllstoffhaltigen Polyurethanschaumes.

## Patentansprüche

1. Verfahren zur Herstellung von Verbundprofilen umfassend mindestens zwei Metallschalen, die mit Stegen aus einem thermoplastischen Material verbunden sind, und einem Kern aus Polyurethan-Hartschaumstoff, umfassend das Einbringen der Ausgangskomponenten des Polyurethan-Hartschaumstoffs in einen von den Metallschalen gebildeten Hohlraum, wobei sich der Polyurethan-Hartschaumstoff bildet, und anschließend die Lackierung der Außenfläche des Verbundprofils mittels eines Pulverlacks oder Einbrennlacks, wobei der Polyurethan-Hartschaumstoffs durch Umsetzung folgender Komponenten erhalten wird:
A) mindestens ein Polyisocyanat,
B) mindestens eine mehrfunktionelle gegenüber Isocyanaten reaktive Verbindung,
C) ein oder mehrere Treibmittel mindestens umfassend Ameisensäure,
D) gegebenenfalls ein oder mehrere Flammschutzmittel,
E) gegebenenfalls ein oder mehrere Katalysatoren, und
F) gegebenenfalls weitere Hilfsmittel oder Zusatzstoffe,
wobei die Ausgangskomponenten des Polyurethan-Hartschaumstoffs keine anorganischen Füllstoffe enthalten.

2. Verfahren nach Anspruch 1, wobei Komponente C) eine wässrige Lösung von Ameisensäure ist.

3. Verfahren nach Anspruch 2, wobei Komponente C) eine Lösung von 70 bis 95 Gew.-% Ameisensäure in Wasser ist.

4. Verfahren nach einem oder mehreren der Ansprüche 1 bis 3, wobei die Menge an Ameisensäure bezogen auf das Gesamtgewicht der Komponenten B) bis F) von 2 bis 6 Gew.-% beträgt.

5. Verfahren nach einem oder mehreren der Ansprüche 1 bis 4, wobei Komponente B) ausschließlich Verbindungen umfasst, die durch Alkoxylierung eines Starters mit ausschließlich Propylenoxid erhalten werden.

6. Verfahren nach einem oder mehreren der Ansprüche 1 bis 5, wobei Komponente B) mindestens ein Polyetherpolyol mit einer Hydroxylzahl von 200 bis 400 mgKOH/g und einer Funktionalität von 2 bis 3 umfasst.

7. Verfahren nach einem oder mehreren der Ansprüche 1 bis 6, wobei Komponente B) mindestens ein Polyetherpolyol mit einer Hydroxylzahl von 300 bis 600 mgKOH/g und einer Funktionalität von 4 bis 8 umfasst.

8. Verfahren nach einem oder mehreren der Ansprüche 1 bis 7, wobei die gewichtsmittlere Funktionalität der Komponente B) von 2,4 bis 5 beträgt.

9. Verfahren nach einem oder mehreren der Ansprüche 1 bis 8, wobei die Lackierung bei einer Temperatur von 100 bis 250°C durchgeführt wird.

10. Verfahren nach einem oder mehreren der Ansprüche 1 bis 9, wobei der Polyurethan-Hartschaumstoff durch Umsetzung folgender Komponenten erhalten wird:
A) mindestens ein Polyisocyanat,
B) mindestens eine mehrfunktionelle gegenüber Isocyanaten reaktive Verbindung,
C) ein oder mehrere Treibmittel mindestens umfassend Ameisensäure
D) ein oder mehrere Flammschutzmittel,
E) ein oder mehrere Katalysatoren, und
F) gegebenenfalls weitere Hilfsmittel oder Zusatzstoffe.

11. Verbundprofile erhältlich gemäß einem oder mehreren der Ansprüche 1 bis 10.

12. Verwendung von Verbundprofilen gemäß Anspruch 11 als Fenster- oder Türrahmen.

## Claims

1. A process for producing composite profiles comprising at least two metal shells which are joined by struts comprising a thermoplastic material and a core comprising rigid polyurethane foam, which comprises introduction of the starting components of the rigid polyurethane foam into a hollow space formed by the metal shells, with the rigid polyurethane foam being formed, and subsequent application of a surface coating to the outer surface of the composite profile by means of a powder coating or baking enamel, where the rigid polyurethane foam is obtained by reaction of the following components:
A) at least one polyisocyanate,
B) at least one polyfunctional compound which is reactive toward isocyanates,
C) one or more blowing agents comprising at least formic acid,
D) optionally one or more flame retardants,
E) optionally one or more catalysts and
F) optionally further auxiliaries or additives,
wherein the starting components of the rigid polyurethane foam do not comprise any inorganic fillers.

2. The process according to claim 1, wherein component C) is an aqueous solution of formic acid.

3. The process according to claim 2, wherein component C) is a solution of from 70 to 95% by weight of formic acid in water.

4. The process according to one or more of claims 1 to 3, wherein the amount of formic acid based on the total weight of the components B) to F) is from 2 to 6% by weight.

5. The process according to one or more of claims 1 to 4, wherein component B) comprises exclusively compounds which are obtained by alkoxylation of a starter by means of exclusively propylene oxide.

6. The process according to one or more of claims 1 to 5, wherein component B) comprises at least one polyether polyol having a hydroxyl number of from 200 to 400 mg KOH/g and a functionality of from 2 to 3.

7. The process according to one or more of claims 1 to 6, wherein component B) comprises at least one polyether polyol having a hydroxyl number of from 300 to 600 mg KOH/g and a functionality of from 4 to 8.

8. The process according to one or more of claims 1 to 7, wherein the weight average functionality of the component B) is from 2.4 to 5.

9. The process according to one or more of claims 1 to 8, wherein surface coating is carried out at a temperature of from 100 to 250°C.

10. The process according to one or more of claims 1 to 9, wherein the rigid polyurethane foam is obtained by reaction of the following components:
A) at least one polyisocyanate,
B) at least one polyfunctional compound which is reactive toward isocyanates,
C) one or more blowing agents comprising at least formic acid,
D) one or more flame retardants,
E) one or more catalysts and
F) optionally further auxiliaries or additives.

11. A composite profile which can be obtained according to one or more of claims 1 to 10.

12. The use of composite profiles according to claim 11 as window frames or doorframes.

## Revendications

1. Procédé de fabrication de profilés composites comprenant au moins deux enveloppes métalliques, qui sont reliées avec des traverses en un matériau thermoplastique, et un noyau en mousse dure de polyuréthane, comprenant l'introduction des composants de départ de la mousse dure de polyuréthane dans une cavité formée par les enveloppes métalliques, la mousse dure de polyuréthane se formant, puis le vernissage de la surface extérieure du profilé composite au moyen d'un vernis en poudre ou d'un émail au four, la mouse dure de polyuréthane étant obtenue par réaction des composants suivants :
A) au moins un polyisocyanate,
B) au moins un composé polyfonctionnel réactif avec les isocyanates,
C) un ou plusieurs agents gonflants comprenant au moins l'acide formique,
D) éventuellement un ou plusieurs agents ignifuges,
E) éventuellement un ou plusieurs catalyseurs, et
F) éventuellement d'autres adjuvants ou additifs,
les composants de départ de la mousse dure de polyuréthane ne contenant pas de charges inorganiques.

2. Procédé selon la revendication 1, dans lequel le composant C) est une solution aqueuse d'acide formique.

3. Procédé selon la revendication 2, dans lequel le composant C) est une solution de 70 à 95 % en poids d'acide formique dans de l'eau.

4. Procédé selon une ou plusieurs des revendications 1 à 3, dans lequel la quantité d'acide formique par rapport au poids total des composants B) à F) est de 2 à 6 % en poids.

5. Procédé selon une ou plusieurs des revendications 1 à 4, dans lequel le composant B) comprend exclusivement des composés qui sont obtenus par alcoxylation d'un démarreur avec exclusivement de l'oxyde de propylène.

6. Procédé selon une ou plusieurs des revendications 1 à 5, dans lequel le composant B) comprend au moins un polyéther polyol ayant un indice hydroxyle de 200 à 400 mg KOH/g et une fonctionnalité de 2 à 3.

7. Procédé selon une ou plusieurs des revendications 1 à 6, dans lequel le composant B) comprend au moins un polyéther polyol ayant un indice hydroxyle de 300 à 600 mg KOH/g et une fonctionnalité de 4 à 8.

8. Procédé selon une ou plusieurs des revendications 1 à 7, dans lequel la fonctionnalité moyenne en poids du composant B) est de 2,4 à 5.

9. Procédé selon une ou plusieurs des revendications 1 à 8, dans lequel le vernissage est réalisé à une température de 100 à 250 °C.

10. Procédé selon une ou plusieurs des revendications 1 à 9, dans lequel la mousse dure de polyuréthane est obtenue par réaction des composants suivants :
A) au moins un polyisocyanate,
B) au moins un composé polyfonctionnel réactif avec les isocyanates,
C) un ou plusieurs agents gonflants comprenant au moins l'acide formique,
D) un ou plusieurs agents ignifuges,
E) un ou plusieurs catalyseurs, et
F) éventuellement d'autres adjuvants ou additifs.

11. Profilés composites pouvant être obtenus selon une ou plusieurs des revendications 1 à 10.

12. Utilisation de profilés composites selon la revendication 11 en tant que cadres de fenêtres ou de portes.
